# EUROPEAN PATENT SPECIFICATION

(11) **EP 3 931 125 B1**
(45) Date of publication and mention of the grant of the patent: **06.07.2022**
(21) Application number: 20710288.0
(22) Date of filing: 26.02.2020
(51) Int. Cl.: B65D 75/30

(54) **PACKAGE AND PACKAGING METHOD**
VERPACKUNG UND VERPACKUNGSVERFAHREN
EMBALLAGE ET PROCÉDÉ D'EMBALLAGE

(30) Priority: 28.02.2019 US 201962812134 P
(43) Date of publication of application: 05.01.2022
(73) Proprietor: 3M Innovative Properties Company, Saint Paul, Minnesota 55133-3427 (US)
(72) Inventor: PETERSON, Donald G., Saint Paul, Minnesota 55133-3427 (US); HA, Phong VanThanh, Saint Paul, Minnesota 55133-3427 (US); SIERACKI, James M., Saint Paul, Minnesota 55133-3427 (US); VOSSEN, Val, Saint Paul, Minnesota 55133-3427 (US)
(74) Representative: Bergen, Katja
(86) International application number: PCT/IB2020/051636
(87) International publication number: WO 2020/174416

(56) References cited:
- EP-A1- 1 529 539
- WO-A1-2013/104537

## Description

### Background

Packaging materials can be closed about an article using a direct contact heat sealing process in which the article is placed between a first layer a second layer, at least one of which includes a layer of a thermally softenable material. Heat and pressure are then applied to activate the thermally softenable material and seal the first and second layers together to form a sealed chamber area about the article. In the direct contact method of heat sealing, a constantly heated die or sealing bar is used to apply heat to a specific contact area, path, or shape, which activates the thermally softenable material and seals the first and second layers together in the designed contact area surrounding the article. To package a wide variety of articles with different shapes and sizes, in many cases a uniquely shaped die or sealing bar is required to effectively form a seal around each type of article matched to its intrinsic shape and sizes. When a wide range of products need to be packaged on a single production line, utilizing shape and size-dependent heat-sealing dies and bars in a direct contact heat sealing process can be expensive, inefficient, and slow.

EP 1 529 539 discloses a sterilization package that encloses a device during sterilization procedure and stores the device in sterile form thereafter. The package comprises a barrier film which defines an interior space and seals the interior space from contaminating microorganisms. At least a portion of the barrier film is formed of a semi-permeable material which is permeable to sterilizing gasses and impermeable to contaminating microorganisms.

WO 2013/104 537 discloses a multilayer structure for the packaging of biomedical films, in particular oral films. The structure comprises cold-adhesive laminates and at least partly non-adhesive supporting layers which are organized in a specific stratified structure. The film packaged therein is effectively isolated from the external environment and protected from accidental mechanical stresses; the packaging process is low-cost and particularly attentive to the delicate structural characteristic of biomedical films.

### Summary

In general, the present disclosure is directed to a package in which a heat seal pattern is incorporated into the packaging material itself, which eliminates the need for article-dependent sealing equipment such as shaped dies and sealing bars. The package of the present disclosure includes a first packaging layer and a second packaging layer that may be laminated together to form a package enclosing an article therebetween. At least one packaging layer includes a major surface having thereon a layer of a thermally softenable material and a patterned blocking passivation layer on the thermally softenable layer. The patterned passivation layer includes a patterned seal area that is substantially free of the passivation material such that the underlying thermally softenable material is exposed in the patterned seal area. An article to be packaged can be placed within the patterned seal area and the first packaging construction is contacted with the second packaging construction. When the thermally softenable material is activated, the first packaging layer and the second packaging layer releasably or permanently bond to one another only along the patterned seal area to form a package, and the article is enclosed and sealed within the patterned seal area. The passivation layer thus limits bonding between the first packaging layer and the second packaging layer to the patterned seal area and blocks unwanted bonding between other portions of the first and second packaging layers, while also preventing adhesion between the article and the packaging layers.

In some embodiments, the patterned seal area can include an article-specific pattern configured to seal an article with a selected size, shape, and the like. A packaging system utilizing the first and the second packaging layers can reduce both the time and materials required to package a wide variety of articles, compared to conventional direct contact heat sealing methods in which a different uniquely designed heating die or bar is required to package each different type of article. In some embodiments, the packaging system can be used in a roll-to-roll process line and can be adapted to both package and sterilize articles intended for use in the healthcare industry. The packaging system of the present disclosure can reduce the requirement of uniquely designed tooling dedicated to specifically shaped and sized articles, eliminate the need for dedicated machine set-up, minimize costs, and allow much faster run speed and higher throughput in a roll-to-roll process.

In one aspect, the present disclosure is directed to a packaging construction including the combination of: a first backing; and a second backing with a first major surface including an adhesive layer, wherein the adhesive layer is overlain by a passivation layer, the passivation layer including a patterned seal area that is substantially free of the passivation layer such that the adhesive layer is exposed in the patterned seal area.

In another aspect, the present disclosure is directed to a method of packaging an article, the method including: in a packaging construction including a first web and a second web, the second web having a first major surface including an adhesive layer, and a passivation layer on the adhesive layer, the passivation layer including a product-specific patterned seal area that is substantially free of the passivation layer such that the adhesive layer is exposed in the patterned seal area; placing the article between the first web and the second web of the packaging construction such that the article resides on the passivation layer and is enclosed within the patterned seal area; and laminating the first web and the second web such that the adhesive layer in the patterned seal area bonds to the first web and forms a package for the article.

In another aspect, the present disclosure is directed a package, including: a first backing, wherein a major surface of the first backing includes a first adhesive layer; and a second backing with a first major surface including a second adhesive layer, and a passivation layer over the second adhesive layer, wherein the passivation layer includes a patterned seal area that is substantially free of the passivation coating such that the second adhesive layer is exposed in the patterned seal area; and an article enclosed within the patterned seal area; wherein the first adhesive layer and the second adhesive layer bond in the patterned seal area to form a reaction product of an adhesive in the first adhesive layer and an adhesive in the second adhesive layer.

These and other embodiments are described below and in the following claims.

### Brief Description of Drawings

FIG. 1 is a schematic cross-sectional view of an embodiment of a product packaging construction.
FIG. 2 is a schematic overhead perspective view of a portion of the product packaging construction of FIG. 1.
FIG. 3 is a schematic cross-sectional view of an embodiment of a package formed from the product packaging construction of FIG. 1.
FIG. 4 is a schematic cross-sectional view of an embodiment of a roll-to-roll process line that can be used to make the package of FIG. 3.

Like symbols in the drawings indicate like elements.

### Detailed Description

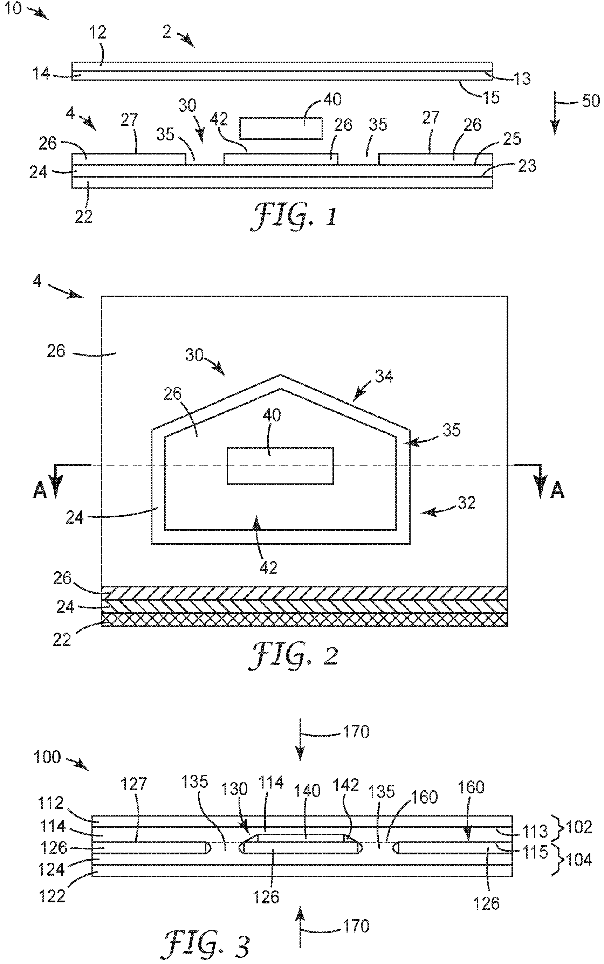

FIG. 1 is a schematic cross-sectional view of a product packaging construction 10 including a first packaging layer 2 with a first backing 12, and a second packaging layer 4 with a second backing 22. The first and the second packaging layers 2,4 can be laminated and bonded together to form a package for an article.

In various embodiments, the first backing 12 and the second backing 22 may be independently selected from any suitable packaging materials including, but not limited to, polymeric films, nonwovens, paper, metal foils, and laminates and combinations thereof.

For example, in one embodiment, the first backing 12 is a vapor-permeable material such as paper or a nonwoven. Suitable vapor-permeable nonwoven materials include, but are not limited to, nonwoven webs made from high density polyethylene (PE) available under the trade designation TYVEK from DowDupont, Wilmington, DE, such as TYVEK 2FS. In some embodiments, nonwoven material webs can have better dimensional stability than papers when the package is heated or undergoes sterilization procedures.

In the embodiment of FIG. 1, the first backing 12 includes a first major surface 13 having thereon an optional layer 14 of an adhesive. The adhesive in the adhesive layer 14 may vary widely and may be selected from any thermoplastic heat softenable adhesive suitable for forming seal coatings. The adhesive layer 14 may include adhesives activated by any suitable technique, including heat, steam, ionizing radiation, pressure, ultrasonic, and combinations thereof. Non-limiting examples of suitable adhesives for the adhesive layer 14 include ethylene vinyl acetate (EVA), low- or linear low-density polyethylene (LDPE, LLDPE), epoxies, urethanes, acrylates, and mixtures and combinations thereof.

The second backing 22 may be selected from polymeric films, nonwovens, paper, metal foils, and laminates and combinations thereof. In some embodiments, the second backing 22 is a thermoplastic polymeric film, and suitable films that have good dimensional stability in each direction when exposed to the elevated temperatures and pressures required in some sealing processes. In some embodiments, the second backing 22 should have a dimensional change of less than 5%, or less than 3%, or less than 2%, in each direction when sealing temperatures and pressures are applied to the backing. In some embodiments, which are not intended to be limiting, the second backing 22 is a polyester film such as polyethylene terephthalate (PET), polyethylene naphthalate (PEN), PET glycol modified (PETG), polyamide, and combinations thereof.

In various embodiments, the thickness of the second backing 22 can be selected to provide a balance between processability and heat transfer during sealing processes, and in various embodiments the second backing 22 has a thickness of less than about 1 mm, or less than about 0.1 mm, or less than about 0.05 mm, or less than about 0.03 mm, or less than about 0.02 mm.

The second backing 22 includes a first major surface 23 having thereon a layer 24 of an adhesive. The adhesive in the adhesive layer 24 may vary widely and may be selected from any thermoplastic adhesive that is releasably or permanently bondable with the first backing 12, or with the adhesive layer 14 on the first backing 12, using any combination of heat, pressure, ultrasonic, or ionizing radiation. The adhesive in the adhesive layer 24 can be coated or extruded on the second backing 22 and should have good melt flow at the temperatures used during extrusion, coating, and sealing, as well as good stability for extended periods of time at ambient temperatures after the packaging construction 10 has been sealed.

Non-limiting examples of the adhesives in the adhesive layer 24 include ethylene vinyl acetate (EVA), low- or linear low-density polyethylene (LDPE, LLDPE), epoxies, urethanes, or acrylates. In some embodiments, which are not intended to be limiting, the adhesives in the adhesive layer 24 include EVA resins include those having a Vicat softening point of about 40 °C to about 70 °C such as those available under the trade designation ELVAX from DowDuPont, Wilmington, DE, particularly ELVAX 3155, 3165, 3170, 3174, 3176, or 3200-2.

The adhesive layer 24 may include adhesives activated by any suitable technique, including heat, steam, ionizing radiation, pressure, ultrasonic, and combinations thereof.

The thickness of the adhesive layer 24 is selected to prevent voids and provide good heat transfer for heat sealing processes, and in some embodiments, which are provided as examples and not intended to be limiting, the adhesive layer 24 has a thickness of about 0.1 mm to about 0.05 mm, or about 0.025 mm to about 0.05 mm.

A first major surface 25 of the adhesive layer 24 includes an overlying patterned passivation layer 26 configured to prevent bonding of the adhesive layer 24 to any layer of the first packaging construction 2. The passivation layer 26 includes an open region of a predetermined shape, referred to herein as the patterned seal area 30, in which the adhesive layer 24 is exposed. Referring also to the non-limiting example shown in FIG. 2, the patterned seal area 30 in the second packaging construction 4 is substantially free of the passivation layer 26, and exposes a limited region of the underlying adhesive layer 24 for subsequent bonding to the first backing 12 or the adhesive layer 14 when the first packing construction 2 and the second packing construction 4 are laminated or otherwise joined.

The shape of the patterned seal area 30 may vary widely depending on the shape and size of an article 40 to be placed within the packaging construction 10 (FIG. 1). In the embodiment of FIG. 2, the second packaging construction 4 includes a patterned seal area 30 including an arrangement of linear channels 35 forming elements of a rectangle 32 and a chevron 34 but may include any regular or irregular geometric shape including squares, circles, trapezoids, tortuous paths, meandering paths, and mixtures and combinations thereof. The channels 35 may have any suitable cross-sectional shape, including rectangular, square, trapezoidal, rounded, and the like, as appropriate for enclosing a particular article 40. The channels 35 need not be linear and can be configured to have any suitable shape that at least partially surrounds the article 40 to be packaged. In some embodiments, the patterned seal area 30 forms a continuous and uninterrupted closed perimeter about the article 40.

The patterned seal area 30 is configured to bound an article placement region 42 of the passivation coating 26 wherein the article 40 is intended to reside within the package. The patterned seal area 30 can have any suitable continuous or discontinuous shape that can provide placement for the article 40. As shown in FIGS. 1-2, the article 40 is placed in the article placement region 42 within the bounds of the patterned seal area 30 such that the channels 35 form a continuous and uninterrupted enclosure about the article 40. However, the area of article placement region 42 within the patterned seal area 30 should be shaped and made sufficiently large that the article 40 does not contact the exposed adhesive 24 in the channels 35.

The materials chosen for the passivation layer 26 may vary widely, and in various embodiments are chosen from surface energy low adhesive backside (LAB) materials that release from the first backing 12 or the adhesive layer 14. In some embodiments, which are not intended to be limiting, the LAB materials in the passivation coating layer 26 include any material that can prevent bonding of the adhesive layer 24 to the first packaging construction 2 can be used for passivation coating 26 such as, for example, LAB materials based on urethanes, acrylates, silicone polyureas, silicone acrylates, or silicones functionalized with acrylates or epoxies.

Referring again to FIG. 1, the first packaging construction 2 and the second packaging construction 4 may be moved along the direction of the arrow 50 and joined or laminated to form a package 100 (FIG. 3). When so laminated, the first major surface 13 of the backing 12, or the exposed major surface 15 of the adhesive layer 14, if present, contacts an exposed major surface 27 of the passivation layer 26. The exposed major surfaces 13 or 15 also overlie the article 40, which is retained on the article placement region 42 within the bounds of the patterned seal area 30, and between the packaging constructions 2 and 4.

Referring now to FIG. 3, the package 100 includes laminated packaging constructions 102 and 104, which are joined along an interface 160 formed between the major surface 127 of the patterned passivation layer 126 and either the major surface 115 of the adhesive layer 114 on the first backing 112, or the major surface 113 of the first backing 112 (embodiment not shown in FIG. 3). The exposed major surfaces 113 or 115 also overlie the article 140, which is retained on the article placement region 142 within the bounds of the patterned seal area 130. Prior to, during or after the lamination of the first packaging construction 102 and the second packaging construction 104, the adhesive in the adhesive layer 124 is activated by at least one of heat, steam, pressure, ultrasonic, ionizing radiation, and combinations thereof applied along the direction of the arrows 170. The adhesive in the adhesive layer 114, if present, may also be activated by at least one of heat, steam, pressure, ultrasonic or ionizing radiation applied along the direction of the arrows 170.

In the embodiment of FIG. 3, the adhesives in the adhesive layers 114 and 124 are activated, soften, and bond in the channels 135 of the patterned seal area 130. The bond thus formed forms an uninterrupted perimeter around the article 140 and seals the article 140 within the enclosed patterned seal area 130. Following the bonding step, the channels 135 of the patterned seal area contain the reaction product of the adhesives in the adhesive layers 114 and 124. For example, in one embodiment, the channels 135 include a reaction product of the thermoplastic adhesive in the adhesive layer 114 and an EVA adhesive from the adhesive layer 124.

In another embodiment, if the adhesive layer 114 is not present, a bond forms between the adhesive in the adhesive layer 124 and the major surface 113 of the first backing 112. Following the bonding step, the channels 135 of the patterned seal area contain the reaction product of the backing 112 and the adhesive in the adhesive layer 124. For example, in one embodiment, the channels 135 include a reaction product of a PE nonwoven material from the backing 112 an EVA adhesive from the adhesive layer 124.

The passivation layer 126 does not bond to the adhesive layer 114 or the first backing 112 along the interface 160 during or after the lamination process. In addition, neither the passivation layer 126, the adhesive layer 114, nor the first backing 112 bond to the article 140 residing in the article placement region 142 and within the bounds of the patterned seal area 130. The patterned seal area 130 and the passivation layer 126 thus operate together to control the points of adhesion along the interface 160 between the first packaging construction 102 and the second packaging construction 104, and a bond between the packaging constructions 102, 104 occurs only along the channels 135 of the patterned seal area 130.

To open the package 100 and remove the article 140 packaged within, the first packaging construction 102 is stripped from the second packaging construction 104 along the interface 160. Since the low surface energy passivation layer 126 releases from the backing 112 or the adhesive layer 114 (if present), the first packaging construction 102 and the second packaging construction 104 may be easily peeled apart. In some embodiments, depending on the strength of the bond between the first packaging construction 102 and the second packaging construction 104 within the channels 135 of the patterned seal area 130, the packaging constructions 102, 104 may peel away from one another approximately along the interface 160 and the bond along the channels 135 is smoothly released. In some embodiments, if the bond along the channels 135 is stronger, separation of the first and second packaging constructions 102, 104 may delaminate or strip away portions of the bonded adhesives in the patterned seal area 130, and residue of the bonded adhesives may remain on the first packaging construction 102, the second packaging construction 104, or both, to form a tamper-evident release construction. In some embodiments, if the first packaging construction 102 includes a nonwoven material as the first backing 112, substantially all the residue of the bonded adhesives will remain on the first major surface 113 of the first backing 112 when the first and second packaging constructions 102, 104 are stripped apart.

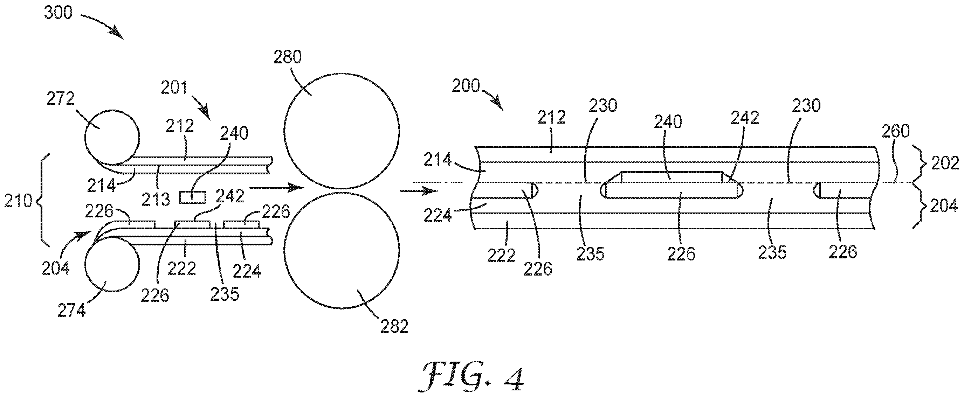

FIG. 4 schematically illustrates an embodiment of a roll-to-roll process line 300 and packaging system 210 that can be used to seal an article 240 between a first packaging construction 202 and a second packaging construction 204 to form a package 200. In the process line 300, a packaging film construction 202 unwinds from a first roller 272. In the embodiment of FIG. 4, the first packaging construction 202 includes a backing 212 that may be chosen from nonwoven materials, polymeric films, paper, and mixtures and combinations thereof. The packaging construction 202 may be any suitable width, and in some non-limiting examples may be up to about 60 inches (about 150 cm) wide. In some embodiments, the backing 212 may have a thickness of less than about 1 mm, or less than about 0.1 mm.

In the embodiment of FIG. 4, the backing 212 includes an adhesive layer 214, which in various embodiments may be applied on a major surface of the film 212 by any suitable technique including, for example, coating, extrusion, and the like. In some embodiments, the adhesive layer 214 includes a heat softenable thermoplastic adhesive.

A second packaging construction 204 unwinds from a second roller 274 in the process line 300. Like the first packaging construction 202, in some embodiments the second packaging construction 204 can be up to about 60 inches (about 150 cm) wide. The second packaging construction 204 includes a backing 222 that may be chosen from nonwoven materials, polymeric films, paper, and mixtures and combinations thereof. The thickness of the backing 222 is less than 1 mm, or less than 0.1 mm, and some embodiments the backing 222 is a polyester film such as, for example, PET.

A layer of an adhesive 224 is applied onto the polymeric backing 222, which in various example embodiments has a thickness of less than about 0.1 mm, or less than about 0.5 mm. The adhesive layer 224 includes any adhesive that can be bonded with the backing 212 or the adhesive layer 214 on the first packaging construction 202. In some non-limiting example embodiments, the adhesive layer 224 includes an EVA adhesive, and may be applied on a major surface of the backing 222 by any suitable technique including, for example, coating, extrusion, and the like.

A patterned low adhesion backside (LAB) passivation layer 226 is on the adhesive layer 224. The passivation layer 226 may be applied over the adhesive layer 224 by any suitable technique including, for example, coating, extrusion, and the like. The passivation layer 226 may be selected from any LAB or release coating material that blocks or prevents bonding of the adhesive layer 224 to either of the layers 212, 214 of the packaging construction 202. In some embodiments, which are not intended to be limiting, the materials in the passivation layer 226 include silicones, and silicone polyureas (SPU) have been found to be particularly suitable.

The passivation layer 226 substantially prevents bonding of the adhesive layer 224 to adjacent surfaces from the first packaging construction 202, except in an open patterned seal area 230 of a predetermined shape in which the adhesive layer 224 is exposed and available for bonding. The patterned seal area 230 is substantially free of the release materials in the passivation layer 226 and exposes a limited region of the underlying adhesive layer 224 for subsequent bonding to the first backing 212 or the adhesive layer 214 when the first packaging construction 202 and the second packaging construction 204 are laminated together.

The shape of the patterned seal area 230 may vary widely depending on the shape and size of an article 240 to be placed within the package 200, and in some embodiments includes an arrangement of channels 235 sized and arranged to provide an article placement region 242 fully and continuously enclosed within the channels 235. The article 240 to be packaged is placed in the article placement region 242 such that the article 240 is within the perimeter formed by the channels 235 and does not contact the exposed adhesive 224 in the patterned seal area 230.

The packaging constructions 202 and 204 forming the packaging system 210 are then laminated and bonded along an interface 260 by running the packaging constructions 202, 204 through an arrangement of nip rollers 280, 282 to form the package 200 with the article 240 contained therein. Contact between the adhesive layer 214 and the adhesive layer 224 in the nip between the rollers 280, 282 forms a bond along an interface 260 between the adhesive layers 214 and 224 along the channels 235, which encloses and fully seals the article 240 within the perimeter of patterned seal area 230. In some embodiments, one or more of the rollers 280, 282 may be heated, which can enhance or activate the bond between the adhesive layers 214 and 224. In some embodiments, bonding between the adhesive layers 214 and 224 forms a reaction product of a first adhesive in the adhesive layer 214 and a second adhesive in the adhesive layer 224 in the channels 235 of the patterned seal area 230.

After the package 200 is formed, in some embodiments the article 240 may be sterilized. For example, if either of the packaging constructions 202, 204 are gas-permeable, the package 200 may be treated with an antimicrobial gas such as, for example, ethylene oxide, to sterilize the article 240 while the article 240 is sealed with the package 200. In another embodiment, the package 200 may be heated, alone or in combination with the antimicrobial gas treatment, to sterilize the article 240.

The web forming the package 200 may be further processed by, for example, slitting, diecutting, or rolling all or a portion of the web onto another roller (not shown in FIG. 4).

To open the package 200 and remove the article 240 packaged within, as discussed above the first packaging construction 202 is delaminated from the second packaging construction 204 along the interface 160. Since the passivation layer 226 releases from the adhesive layer 214, the first packaging construction 202 and the second packaging construction 204 may be easily peeled apart. The bond between the first packaging construction 202 and the second packaging construction 204 within the channels 235 of the patterned seal area 230 releases with low peel force, the packaging constructions 202, 204 separate smoothly along the interface 260, and in some embodiments substantially no residue of the bonded adhesive remains on the first packaging construction 202 or the second packaging construction 204 after the separation step. In some embodiments, separation of the first and second packaging constructions 202, 204 may delaminate or strip away portions of the bonded adhesives in the patterned seal area 230, and residue of the bonded adhesives may remain on the first packaging construction 202, the second packaging construction 204, or both, to form a tamper-evident release construction. In some embodiments, if the first packaging construction 202 includes a backing of a nonwoven material 212, substantially all the residue of the bonded adhesives will remain on the first major surface 213 of the nonwoven backing 212 when the first and second packaging constructions 202, 204 are stripped apart.

## Claims

1. A packaging construction (10) comprising the combination of:
a first backing (12); and
a second backing (22) with a first major surface (23) comprising an adhesive layer (24), **characterised in that** the adhesive layer (24) is overlain by a passivation layer (26), the passivation layer (26) comprising a patterned seal area (30) that is substantially free of the passivation layer (26) such that the adhesive layer is exposed in the patterned seal area (30).

2. The packaging construction (10) of any one of the preceding claims, wherein the adhesive layer bonds to the first backing (12) when an adhesive in the adhesive layer is activated.

3. The packaging construction (10) of claim 2, wherein the adhesive bonds to the first backing (12) when heat is applied to the packaging construction (10).

4. The packaging construction (10) of any one of the preceding claims, wherein the first backing (12) is a gas-permeable nonwoven material.

5. The packaging construction (10) of any one of the preceding claims, wherein the first backing (12) comprises a first adhesive layer (14) on a major surface thereof.

6. The packaging construction (10) of claim 5, wherein the first adhesive layer (14) is bondable with the adhesive layer (24) on the second backing.

7. The packaging construction (10) of claim 5, wherein the first adhesive layer (14) bonds to the adhesive layer (24) on the second backing (22) when heat is applied to the packaging construction (10) to form a reaction product of an adhesive in the first adhesive layer (14) and an adhesive from the adhesive layer (24) on the second backing (22).

8. The packaging construction (10) of any one of the preceding claims, wherein the passivation layer (26) comprises a low adhesive backside material chosen from urethanes, acrylates, silicone polyureas, silicone acrylates, or silicones functionalized with acrylates or epoxies.

9. The packaging construction (10) of any one of the preceding claims, wherein the patterned seal area (30) comprises an arrangement of channels (35) formed in the passivation layer (26).

10. The packaging construction (10) of claim 9, wherein the channels (35) form a continuous closed perimeter.

11. A package (100) comprising:
a packaging construction according to claim 1, wherein a major surface (13) of the first backing (12) comprises an adhesive layer (14); and
an article enclosed within the patterned seal area;
wherein the adhesive layer of the first backing (12) and the adhesive layer of the second backing (22) bond in the patterned seal area to form a reaction product of an adhesive in the first adhesive layer and an adhesive in the second adhesive layer.

12. A method of packaging an article, the method comprising:
in a packaging construction comprising a first web and a second web, the second web having a first major surface comprising an adhesive layer, and a passivation layer on the adhesive layer, the passivation layer comprising a product-specific patterned seal area that is substantially free of the passivation layer such that the adhesive layer is exposed in the patterned seal area;
placing the article between the first web and the second web of the packaging construction such that the article resides on the passivation layer and is enclosed within the patterned seal area; and
laminating the first web and the second web such that the adhesive layer in the patterned seal area bonds to the first web and forms a package for the article.

13. The method of claim 12, comprising activating the adhesive layer by one of (i) applying heat to the packaging construction prior to, during, or after the lamination, (ii) exposing the packaging construction to ionizing radiation prior to, during, or after the lamination, or (iii) passing the packaging construction through an arrangement of nip rollers.

14. The method of claim 13, wherein at least one roller in the arrangement of nip rollers is heated.

15. The method of any one of claims 12-14, wherein the first web further comprises an adhesive layer on a major surface thereof, and wherein the adhesive layer in the patterned seal area bonds to the adhesive layer on the first web.

## Patentansprüche

1. Eine Verpackungskonstruktion (10), aufweisend die Kombination aus:
einem ersten Träger (12); und
einem zweiten Träger (22) mit einer ersten Hauptoberfläche (23), die eine Klebstoffschicht (24) aufweist, **dadurch gekennzeichnet, dass** die Klebstoffschicht (24) durch eine Passivierungsschicht (26) überlagert ist, wobei die Passivierungsschicht (26) einen gemusterten Dichtungsbereich (30) aufweist, der im Wesentlichen frei von der Passivierungsschicht (26) ist, so dass die Klebstoffschicht in dem gemusterten Dichtungsbereich (30) freiliegt.

2. Die Verpackungskonstruktion (10) nach einem der vorstehenden Ansprüche, wobei die Klebstoffschicht an den ersten Träger (12) gebunden wird, wenn ein Klebstoff in der Klebstoffschicht aktiviert wird.

3. Die Verpackungskonstruktion (10) nach Anspruch 2, wobei der Klebstoff an den ersten Träger (12) gebunden wird, wenn Wärme an die Verpackungskonstruktion (10) angelegt wird.

4. Die Verpackungskonstruktion (10) nach einem der vorstehenden Ansprüche, wobei der erste Träger (12) ein gasdurchlässiges Vliesmaterial ist.

5. Die Verpackungskonstruktion (10) nach einem der vorstehenden Ansprüche, wobei der erste Träger (12) eine erste Klebstoffschicht (14) auf einer Hauptoberfläche davon aufweist.

6. Die Verpackungskonstruktion (10) nach Anspruch 5, wobei die erste Klebstoffschicht (14) mit der Klebstoffschicht (24) auf dem zweiten Träger verbindbar ist.

7. Die Verpackungskonstruktion (10) nach Anspruch 5, wobei die erste Klebstoffschicht (14) mit der Klebstoffschicht (24) auf dem zweiten Träger (22) verbunden wird, wenn Wärme an die Verpackungskonstruktion (10) angelegt wird, um ein Reaktionsprodukt eines Klebstoffs in der ersten Klebstoffschicht (14) und eines Klebstoffs aus der Klebstoffschicht (24) auf dem zweiten Träger (22) zu bilden.

8. Die Verpackungskonstruktion (10) nach einem der vorstehenden Ansprüche, wobei die Passivierungsschicht (26) ein schwach haftendes Rückseitenmaterial, ausgewählt aus Urethanen, Acrylaten, Silikonpolyharnstoffen, Silikonacrylaten oder mit Acrylaten oder Epoxiden funktionalisierten Silikonen.

9. Die Verpackungskonstruktion (10) nach einem der vorstehenden Ansprüche, wobei der gemusterte Dichtungsbereich (30) eine Anordnung von Kanälen (35) aufweist, die in der Passivierungsschicht (26) ausgebildet sind.

10. Die Verpackungskonstruktion (10) nach Anspruch 9, wobei die Kanäle (35) einen durchgehenden geschlossenen Umfang bilden.

11. Eine Packung (100), aufweisend:
Eine Verpackungskonstruktion nach Anspruch 1, wobei eine Hauptoberfläche (13) des ersten Trägers (12) eine Klebstoffschicht (14) aufweist; und
einen Gegenstand, der innerhalb des gemusterten Dichtungsbereichs umschlossen ist;
wobei sich die Klebstoffschicht des ersten Trägers (12) und die Klebstoffschicht des zweiten Trägers (22) in dem gemusterten Dichtungsbereich verbinden, um ein Reaktionsprodukt eines Klebstoffs in der ersten Klebstoffschicht und eines Klebstoffs in der zweiten Klebstoffschicht zu bilden.

12. Ein Verfahren zum Verpacken eines Gegenstands, wobei das Verfahren aufweist:
in einer Verpackungskonstruktion, aufweisend eine erste Bahn und eine zweite Bahn, wobei die zweite Bahn eine erste Hauptoberfläche aufweist, die eine Klebstoffschicht und eine Passivierungsschicht auf der Klebstoffschicht aufweist, wobei die Passivierungsschicht einen produktspezifischen gemusterten Dichtungsbereich aufweist, der im Wesentlichen frei von der Passivierungsschicht ist, so dass die Klebstoffschicht in dem gemusterten Dichtungsbereich freiliegt;
Platzieren des Gegenstands zwischen der ersten Bahn und der zweiten Bahn der Verpackungskonstruktion derart, dass sich der Gegenstand auf der Passivierungsschicht befindet und innerhalb des gemusterten Dichtungsbereichs umschlossen ist; und
Laminieren der ersten Bahn und der zweiten Bahn derart, dass die Klebstoffschicht in dem gemusterten Dichtungsbereich an die erste Bahn gebunden wird und eine Verpackung für den Gegenstand bildet.

13. Das Verfahren nach Anspruch 12, aufweisend das Aktivieren der Klebstoffschicht durch eines von (i) Anlegen von Wärme an die Verpackungskonstruktion vor, während oder nach der Laminierung, (ii) Aussetzen der Verpackungskonstruktion gegenüber ionisierender Strahlung vor, während oder nach der Laminierung oder (iii) Leiten der Verpackungskonstruktion durch eine Anordnung von Andruckwalzen.

14. Das Verfahren nach Anspruch 13, wobei mindestens eine Walze in der Anordnung von Andruckwalzen erwärmt wird.

15. Das Verfahren nach einem der Ansprüche 12 bis 14, wobei die erste Bahn ferner eine Klebstoffschicht auf einer Hauptoberfläche davon aufweist, und wobei die Klebstoffschicht in dem gemusterten Dichtungsbereich an die Klebstoffschicht auf der ersten Bahn gebunden wird.

## Revendications

1. Construction d'emballage (10) comprenant la combinaison de :
un premier support (12) ; et
un second support (22) avec une première surface principale (23) comprenant une couche adhésive (24), **caractérisée en ce que** la couche adhésive (24) est recouverte par une couche de passivation (26), la couche de passivation (26) comprenant une zone de joint structurée (30) qui est sensiblement exempte de la couche de passivation (26) de telle sorte que la couche adhésive est exposée dans la zone de joint structurée (30).

2. Construction d'emballage (10) selon l'une quelconque des revendications précédentes, dans laquelle la couche adhésive se lie au premier support (12) lorsqu'un adhésif dans la couche adhésive est activé.

3. Construction d'emballage (10) selon la revendication 2, dans laquelle l'adhésif se lie au premier support (12) lorsque de la chaleur est appliquée à la construction d'emballage (10).

4. Construction d'emballage (10) selon l'une quelconque des revendications précédentes, dans laquelle le premier support (12) est un matériau non tissé perméable aux gaz.

5. Construction d'emballage (10) selon l'une quelconque des revendications précédentes, dans laquelle le premier support (12) comprend une première couche adhésive (14) sur une surface principale de celui-ci.

6. Construction d'emballage (10) selon la revendication 5, dans laquelle la première couche adhésive (14) peut être liée avec la couche adhésive (24) sur le second support.

7. Construction d'emballage (10) selon la revendication 5, dans laquelle la première couche adhésive (14) se lie à la couche adhésive (24) sur le second support (22) lorsque de la chaleur est appliquée à la construction d'emballage (10) pour former un produit de réaction d'un adhésif dans la première couche adhésive (14) et d'un adhésif de la couche adhésive (24) sur le second support (22).

8. Construction d'emballage (10) selon l'une quelconque des revendications précédentes, dans laquelle la couche de passivation (26) comprend un matériau d'apprêt faiblement adhésif choisi parmi des uréthanes, des acrylates, des polyurées de silicone, des acrylates de silicone, ou des silicones fonctionnalisées avec des acrylates ou des époxydes.

9. Construction d'emballage (10) selon l'une quelconque des revendications précédentes, dans laquelle la zone de joint structurée (30) comprend un agencement de canaux (35) formés dans la couche de passivation (26).

10. Construction d'emballage (10) selon la revendication 9, dans laquelle les canaux (35) forment un périmètre fermé continu.

11. Emballage (100) comprenant :
une construction d'emballage selon la revendication 1, dans lequel une surface principale (13) du premier support (12) comprend une couche adhésive (14) ; et
un article enfermé à l'intérieur de la zone de joint structurée ;
dans lequel la couche adhésive du premier support (12) et la couche adhésive du second support (22) se lient dans la zone de joint structurée pour former un produit de réaction d'un adhésif dans la première couche adhésive et d'un adhésif dans la seconde couche adhésive.

12. Procédé d'emballage d'un article, le procédé comprenant :
dans une construction d'emballage comprenant une première bande et une seconde bande, la seconde bande ayant une première surface principale comprenant une couche adhésive, et une couche de passivation sur la couche adhésive, la couche de passivation comprenant une zone de joint structurée spécifique à un produit qui est sensiblement exempte de la couche de passivation de telle sorte que la couche adhésive est exposée dans la zone de joint structurée ;
la mise en place de l'article entre la première bande et la seconde bande de la construction d'emballage de telle sorte que l'article se situe sur la couche de passivation et est enfermé à l'intérieur de la zone de joint structurée ; et
la stratification de la première bande et de la seconde bande de telle sorte que la couche adhésive dans la zone de joint structurée se lie à la première bande et forme un emballage pour l'article.

13. Procédé selon la revendication 12, comprenant l'activation de la couche adhésive par l'un parmi (i) l'application de chaleur à la construction d'emballage avant, pendant, ou après la stratification, (ii) l'exposition de la construction d'emballage à un rayonnement ionisant avant, pendant, ou après la stratification, ou (iii) le passage de la construction d'emballage à travers un agencement de rouleaux pinceurs.

14. Procédé selon la revendication 13, dans lequel au moins un rouleau dans l'agencement de rouleaux pinceurs est chauffé.

15. Procédé selon l'une quelconque des revendications 12 à 14, dans lequel la première bande comprend en outre une couche adhésive sur une surface principale de celle-ci, et dans lequel la couche adhésive dans la zone de joint structurée se lie à la couche adhésive sur la première bande.
